# EUROPÄISCHE PATENTSCHRIFT

(11) **EP 2 049 779 B1**
(45) Veröffentlichungstag und Bekanntmachung des Hinweises auf die Patenterteilung: **31.03.2010**
(21) Anmeldenummer: 07788030.0
(22) Anmeldetag: 30.07.2007
(51) Int. Cl.: F02B 29/08, F02M 25/07

(54) **BRENNKRAFTMASCHINE**
INTERNAL COMBUSTION ENGINE
MOTEUR À COMBUSTION

(30) Priorität: 11.08.2006 DE 102006037934
(43) Veröffentlichungstag der Anmeldung: 22.04.2009
(73) Patentinhaber: MAHLE International GmbH, 70376 Stuttgart (DE)
(72) Erfinder: ELSÄSSER, Alfred, 75210 Keltern (DE)
(74) Vertreter: BRP Renaud & Partner
(86) Internationale Anmeldenummer: PCT/EP2007/057826
(87) Internationale Veröffentlichungsnummer: WO 2008/017605

(56) Entgegenhaltungen:
- EP-A- 0 141 165
- EP-A- 1 712 760
- EP-A2- 0 531 277
- EP-A2- 1 236 875
- DE-A1- 4 414 849
- DE-A1- 10 032 669
- DE-A1- 10 235 998
- DE-A1- 10 240 913
- DE-A1- 10 336 603
- DE-A1- 19 830 575
- JP-A- 61 016 256
- JP-A- 2000 034 955

## Beschreibung

Die vorliegende Erfindung betrifft eine Brennkraftmaschine, insbesondere in einem Kraftfahrzeug, mit den Merkmalen des Oberbegriffs des Anspruchs 1.

Üblicherweise weist eine Brennkraftmaschine, die in einem Kraftfahrzeug angeordnet sein kann, eine Frischgasanlage zur Versorgung von Brennräumen der Brennkraftmaschine mit Frischgas auf. Die Brennräume sind in einem Motorblock innerhalb von Zylindern ausgebildet, in denen Kolben hubverstellbar angeordnet sind. Eine Abgasanlage dient zum Abführen von Abgasen aus den Brennräumen. Moderne Brennkraftmaschinen sind zur Reduzierung der Schadstoffemissionen mit einer Abgasrückführanlage ausgestattet, die eine Rückführung von Abgasen von der Abgasanlage in die Frischgasanlage ermöglicht.

Um Abgase von der Abgasanlage in die Frischgasanlage rückführen zu können, muss eine entsprechende Druckdifferenz vorliegen. In bestimmten Betriebszuständen der Brennkraftmaschine ist diese Druckdifferenz zu klein, um hinreichend Abgase rückführen zu können. Diese Problematik verschärft sich, wenn in der Frischgasanlage eine Ladeeinrichtung zur Erhöhung des Druckniveaus im Frischgas angeordnet ist und die rückgeführten Abgase stromab dieser Ladeeinrichtung eingeleitet werden sollen, um Verunreinigungen der Ladeeinrichtung durch rückgeführtes Abgas zu vermeiden. Bei aufgeladenen Brennkraftmaschinen besteht somit auch im Teillastbereich die Gefahr, dass die Druckdifferenz zwischen Frischgasseite und Abgasseite nicht ausreicht, eine hinreichende Abgasmenge auf die Frischgasseite rückzuführen.

Aus der EP 1 095 210 B1, der DE 102 40 913 A1 und aus der EP 1 236 875 B1 ist es bekannt, in einer Frischgasanlage stromab einer Ladeeinrichtung zur Erhöhung des Druckniveaus im Frischgas und stromauf eines Einlassventils des jeweiligen Brennraums ein Drehschieberventil anzuordnen, mit dem es möglich ist, strömungsdynamische Effekte zur Erzielung einer Impulsaufladung des jeweiligen Brennraums auszunutzen. Desweiteren kann mit Hilfe eines derartigen Drehschieberventils ein sogenannter "Miller-Zyklus" realisiert werden, bei dem der Schließzeitpunkt des jeweiligen Drehschieberventils nach früh verstellt wird, um den Beladungsvorgang bereits vor dem Schließen des jeweiligen Einlassventils zu beenden. Durch diesen Miller-Zyklus kann der Wirkungsgrad der Brennkraftmaschine verbessert werden, während gleichzeitig eine Absenkung von NOₓ-Emissionswerten erzielbar ist. Im Hinblick auf diesen Miller-Zyklus und insbesondere im Hinblick auf die Impulsaufladung werden die vorstehend genannten Dokumente durch ausdrückliche Bezugnahme zum Offenbarungsgehalt der vorliegenden Erfindung hinzugefügt.

Die vorliegende Erfindung beschäftigt sich mit dem Problem, für eine Brennkraftmaschine der eingangs genannten Art eine verbesserte Ausführungsform anzugeben, die sich insbesondere durch eine verbesserte Abgasrückführung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in der Frischgasanlage im Bereich einer Einleitstelle, über die das rückgeführte Abgas von der Abgasrückführanlage in die Frischgasanlage gelangt, während eines Einlassvorgangs eines stromab der Einleitstelle angeordneten Brennraums vorübergehend den Druck abzusenken. Hierdurch kann quasi für jeden Betriebszustand der Brennkraftmaschine eine hinreichend große Druckdifferenz zwischen Abgasanlage und Frischgasanlage zum Antreiben des rückzuführenden Abgases erzeugt werden, so dass im Idealfall in jedem Betriebszustand eine ausreichende Abgasmenge rückgeführt werden kann. Erreicht wird diese lokale Druckabsenkung in der Frischgasanlage mit Hilfe wenigstens eines Schaltventils, mit dem ein Strömungsquerschnitt in der Frischgasanlage gesteuert werden kann. Das jeweilige Schaltventil ist hierzu stromauf der Einleitstelle angeordnet, so dass mit dem Schließen des Strömungsquerschnitts eine Drucksabsenkung in der Frischgasanlage vom Schaltventil bis zum jeweiligen Brennraum entsteht, wenn das Volumen des Brennraums während des Einlassvorgangs vergrößert wird. Damit der jeweilige Brennraum nicht nur mit rückgeführtem Abgas befüllt wird, öffnet das Schaltventil rechtzeitig während des Einlassvorgangs. Durch den damit einhergehenden Druckanstieg in der Frischgasanlage stromab des Schaltventils wird die Abgasrückführung entsprechend reduziert bzw. beendet, so dass Frischgas in den jeweiligen Brennraum gelangt. Durch die Auswahl des Öffnungszeitpunkts des Schaltventils kann die Abgasrückführrate eingestellt werden. Somit kann z.B. auf ein zusätzliches Steuerventil in der Abgasrückführanlage verzichtet werden.

Bei einer vorteilhaften Ausführungsform kann die Abgasrückführanlage stromauf der jeweiligen Einleitstelle ein Rückschlagsperrventil enthalten, das ab einer vorbestimmten Druckdifferenz öffnet und eine Abgasströmung in die Frischgasanlage ermöglicht. Mit Hilfe eines derartigen Rückschlagsperrventils ist es insbesondere möglich, eine Abgasrückführung nur dann zuzulassen, wenn eine vorbestimmte Druckdifferenz zwischen Abgasanlage und Frischgasanlage vorliegt. Diese vorbestimmte Druckdifferenz kann beispielsweise gezielt so ausgewählt werden, dass nur dann eine Abgasrückführung stattfindet, wenn auf der Frischgasseite mit Hilfe des Schaltventils der Druck abgesenkt wird. Hierdurch kann die Abgasrückführrate mit Hilfe des Schaltventils besonders genau eingestellt werden.

Gemäß einer vorteilhaften Ausführungsform kann vorgesehen sein, mit Hilfe des Schaltventils während des Einlassvorgangs zeitlich vor einem Einlassende den Strömungsquerschnitt in der Frischgasanlage wieder zu schließen, insbesondere um so einen Miller-Zyklus zu realisieren. Hierdurch kann im jeweiligen Brennraum gezielt eine Druckabsenkung erreicht werden, was für eine Temperaturabsenkung im Brennraum genutzt werden kann. Hierdurch lässt sich der Verbrennungsprozess hinsichtlich reduzierter NOₓ-Emissionen beeinflussen.

Bei einer weiteren vorteilhaften Ausführungsform kann vorgesehen sein, mit Hilfe des jeweiligen Schaltventils eine Impulsaufladung des jeweiligen Brennraums mit Frischgas zu realisieren. Bei einer Impulsaufladung werden strömungsdynamische Effekte, nämlich die Ausbreitung positiver und negativer Druckwellen, ausgenutzt, um die Menge des in den jeweiligen Brennraum eingebrachten Frischgases zu erhöhen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils eine schaltplanartige, stark verein- fachte Prinzipdarstellung einer Brennkraft- maschine bei verschiedenen Ausführungsfor- men,
- Fig. 3: ein Diagramm, in dem Zustände von Einlass- ventilen bei mehreren Brennräumen und Zu- stände eines Schaltventils in Abhängigkeit eines Kurbelwellenwinkels dargestellt sind,
- Fig. 4 bis 7: jeweils stark vereinfachte, prinzipielle Längsschnitte von Schaltventilen unter- schiedlicher Ausführungsformen, jeweils in einer Schließstellung (a) und in einer Of- fenstellung (b).

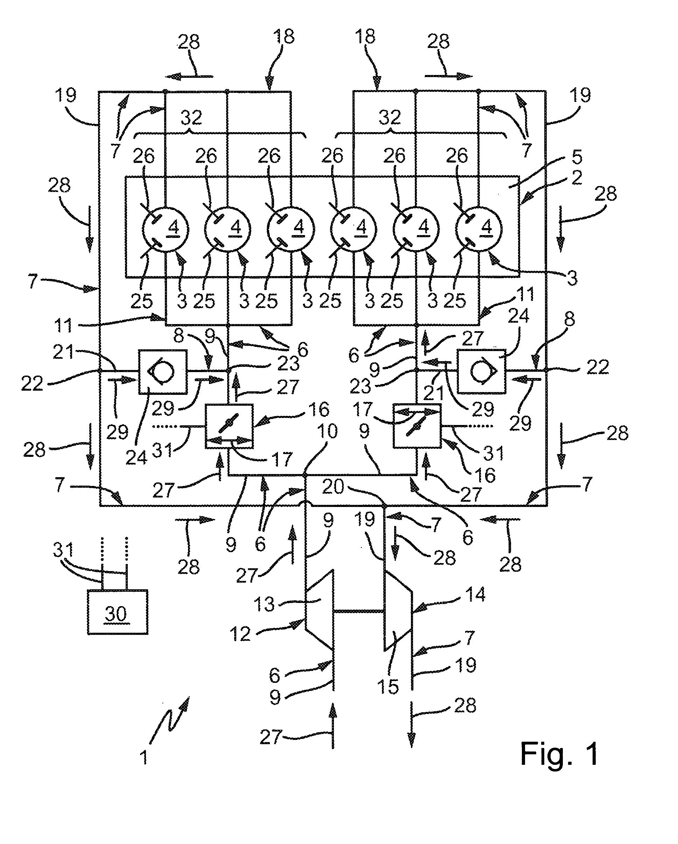

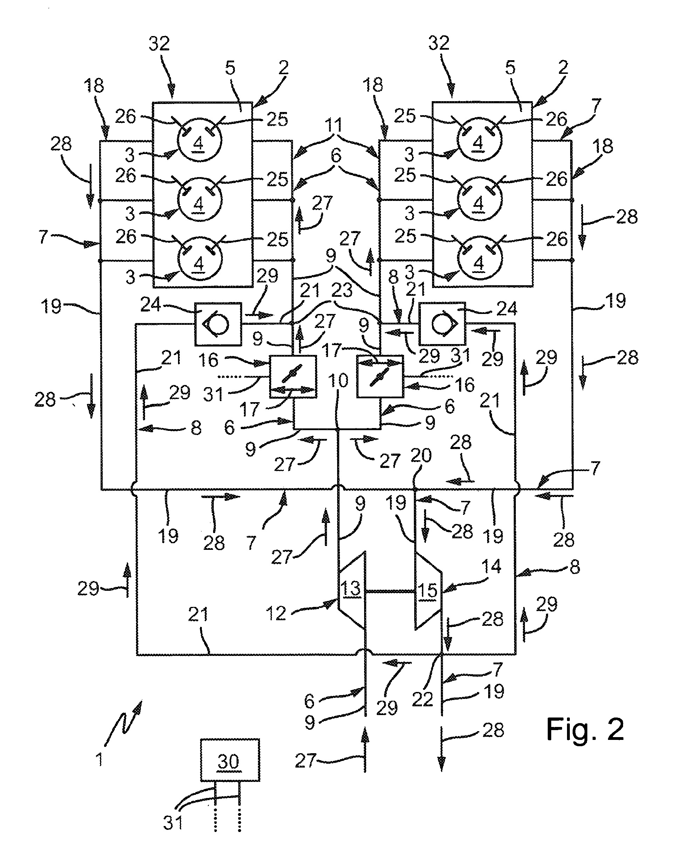

Entsprechend den Fig. 1 und 2 weist eine Brennkraftmaschine 1, die vorzugsweise in einem Kraftfahrzeug angeordnet ist, einen Motorblock 2 auf, in dem mehrere Zylinder 3 ausgebildet sind, in denen jeweils in üblicher Weise ein nicht näher bezeichneter Kolben hubverstellbar angeordnet ist und die jeweils einen Brennraum 4 umschließen. In Fig. 1 ist beispielhaft ein 6-Zylinder-Reihenmotor wiedergegeben, bei dem die sechs Zylinder 3 in einer einzigen Zylinderbank 5 des Motorblocks 2 angeordnet sind. Im Unterschied dazu zeigt Fig. 2 rein exemplarisch einen 6-Zylinder-V-Motor, bei dem die sechs Zylinder 3 auf zwei Zylinderbänke 5 mit jeweils drei Zylindern 3 aufgeteilt sind. Es ist klar, dass die vorliegende Erfindung auch bei Brennkraftmaschinen 1 realisierbar ist, die andere Anzahlen an Zylindern 3 und anderen Anordnungen der Zylinder 3 aufweisen.

Die Brennkraftmaschine 1 weist außerdem eine Frischgasanlage 6, eine Abgasanlage 7 und eine Abgasrückführanlage 8 auf, die im folgenden auch kurz als AGR-Anlage 8 bezeichnet wird.

Die Frischgasanlage 6 dient zur Versorgung der Brennräume 4 mit Frischgas. Die Frischgasanlage 6 weist eine Frischgasleitung 9 auf, die entsprechend der hier gezeigten speziellen Ausführungsformen bei einer Aufzweigstelle 10 in zwei oder mehr Abschnitte oder Zweige aufgezweigt sein kann. Die Frischgasleitung 9 ist hier über zumindest einen, im vorliegenden Fall über zwei Frischgasverteiler 11 an den Motorblock 2 angeschlossen. Vorzugsweise ist in der Frischgasanlage 6 eine Ladeeinrichtung 12 angeordnet, mit deren Hilfe das Frischgas in der Frischgasanlage 6 stromab der Ladeeinrichtung 12 auf ein erhöhtes Druckniveau gebracht werden kann. Im gezeigten Beispiel handelt es sich bei der Ladeeinrichtung 12 um einen Verdichter 13 eines Abgasturboladers 14, dessen Turbine 15 in der Abgasanlage 7 angeordnet ist. Die Ladeeinrichtung 12 bzw. der Verdichter 13 ist stromauf der Abzweigstelle 10 in der Frischgasleitung 9 angeordnet. Ferner enthält die Frischgasanlage 6 zumindest ein Schaltventil 16. Im Beispiel sind ohne Beschränkung der Allgemeinheit zwei derartige Schaltventile 16 vorgesehen, die stromab der Abzweigstelle 10 jeweils in einem Zweig der Frischgasleitung 9 angeordnet sind. Jedes Schaltventil 16 ist so ausgestaltet, dass damit ein Strömungsquerschnitt 17 in der Frischgasanlage 6 bzw. in der jeweiligen Frischgasleitung 9 gesteuert werden kann. Das bedeutet, dass das Schaltventil 16 zumindest zwischen einer Schließstellung, in der es den Strömungsquerschnitt 17 mehr oder weniger sperrt, und einer Offenstellung verstellbar ist, in der es den Strömungsquerschnitt 17 mehr oder weniger frei gibt. Je nach Ausführungsform sind auch eine oder mehrere oder beliebig viele Zwischenstellung möglich.

Die Abgasanlage 7 dient zum Abführen von Abgas aus den Brennräumen 4 und kann eingangsseitig zumindest einen, im vorliegenden Fall zwei Abgassammler 18 aufweisen, die jeweils in eine Abgasleitung 19 übergehen. Die Abgasleitung 19 vereint sich in einer Vereinigungsstelle 20 zu einer gemeinsamen Abgasleitung 19. In der Abgasleitung 19 ist stromab der Vereinigungsstelle 20 die Turbine 15 des Abgasturboladers 14 angeordnet.

Die AGR-Anlage 8 weist zumindest eine Abgasrückführleitung 21 auf, die im folgenden auch kurz als AGR-Leitung 21 bezeichnet wird. Die AGR-Anlage 8 zweigt bei wenigstens einer Abzweigstelle 22 von der Abgasanlage 7 ab und mündet bei wenigstens einer Einleitstelle 23 in die Frischgasanlage 6 ein. Im Beispiel ist für jede AGR-Leitung 21 eine separate Abzweigstelle 22 sowie eine separate Einleitstelle 23 vorgesehen. Die Einleitstellen 23 sind dabei jeweils in der Frischgasanlage 6 bzw. in der jeweiligen Frischgasleitung 9 stromab des jeweiligen Schaltventils 16 angeordnet. Die jeweilige Abzweigstelle 22 ist bei der in Fig. 1 gezeigten Ausführungsform in der Abgasanlage 7 bzw. in der Abgasleitung 19 stromauf der Turbine 15 angeordnet, während sie bei der in Fig. 2 gezeigten Ausführungsform stromab der Turbine 15 angeordnet ist. Bei der Durchströmung der Turbine 15 erfährt das Abgas eine gewisse Abkühlung, so dass das über die stromab des Verdichters 15 angeordnete Abzweigstelle 22 abgezweigte, rückzuführende Abgas eine reduzierte Temperatur aufweist. Dies ist zur Erzielung reduzierter NOₓ-Emissionswerte von Vorteil. Üblicherweise enthält die AGR-Anlage 8 einen Wärmeübertrager zur Kühlung der rückzuführenden Abgase. Ein derartiger AGR-Kühler ist hier nicht eingezeichnet und ist bevorzugt in der jeweiligen AGR-Leitung 21 angeordnet. Zweckmäßig ist ein AGR-Kühler für beide AGR-Leitungen 21 vorgesehen.

Die AGR-Anlage 8 kann gemäß den hier gezeigten bevorzugten Ausführungsformen zumindest ein Rückschlagsperrventil 24 enthalten. In den Beispielen ist in jeder AGR-Leitung 21 ein derartiges Rückschlagsperrventil 24 angeordnet. Das jeweilige Rückschlagsperrventil 24 schließt in Richtung zur Abgasanlage 7 und öffnet in Richtung zur Frischgasanlage 6. Vorzugsweise ist das jeweilige Rückschlagsperrventil 24, z.B. mittels einer Rückstellfeder, so ausgestaltet, dass es erst bei einer vorbestimmten Druckdifferenz zwischen Frischgasanlage 6 und Abgasanlage 7 öffnet.

Um den Ladungswechsel in den einzelnen Brennräumen 4 zu steuern, sind in herkömmlicher Weise Einlassventile 25 und Auslassventile 26 vorgesehen. Die sich im Betrieb der Brennkraftmaschine 1 einstellende Frischgasströmung ist durch Pfeile 27 angedeutet, die sich einstellende Abgasströmung ist durch Pfeile 28 angedeutet und die Strömung des rückgeführten Abgases ist durch Pfeile 29 angedeutet.

Die Brennkraftmaschine 1 ist außerdem mit einer Steuereinrichtung 30 ausgestattet, die zur Betätigung des wenigstens einen Schaltventils 16 dient. Hierzu ist die Steuereinrichtung 30 über entsprechende Steuerleitungen 31 mit den Schaltventilen 16 verbunden. Die Steuereinrichtung 30 kann in ein Motorsteuergerät der Brennkraftmaschine 1 hardwaremäβig integriert und/oder softwaremäßig implementiert sein. Die Steuereinrichtung 30 ist so ausgestaltet, dass sie während eines Einlassvorgangs des jeweiligen Brennraums 4 zeitlich nach einem Einlassbeginn, das jeweilige Schaltventil 16 zum Öffnen des Strömungsquerschnitts 17 ansteuert. Hierdurch kann bis zum Öffnen des Schaltventils 16 stromab davon in der Frischgasanlage 6 bzw. in der jeweilige Frischgasleitung 9 ein Unterdruck erzielt werden. Denn während des Einlassvorgangs wird das Volumen des jeweiligen Brennraums 4 durch eine entsprechende Kolbenbewegung im zugehörigen Zylinder 3 vergrößert. Die frischgasseitige Druckabsenkung vergrößert die Druckdifferenz zwischen Frischgasseite und Abgasseite, so dass das jeweilige Rückschlagsperrventil 24 bei der vorgegebenen Druckdifferenz öffnet und eine Rückführung von Abgas ermöglicht.

Bei den hier gezeigten Ausführungsformen sind die beiden Schaltventile 16 jeweils mehreren Brennräumen 4, nämlich jeweils drei Brennräumen 4 zugeordnet, wobei die drei Brennräume 4 so ausgewählt sind, dass ihre Einlassvorgänge zeitlich versetzt aufeinander folgen. Um die Abgasrückführung bei mehreren Brennräumen 4 mit einem gemeinsamen Schaltventil 16 steuern zu können, sind die jeweiligen Brennräume 4 jeweils zu einer Gruppe 32 zusammengefasst, die in Fig. 1 durch geschweifte Klammern gekennzeichnet sind. In den beiden Beispielen sind somit jeweils zwei Gruppen 32 vorgesehen, denen jeweils ein einziges Schaltventil 16 zugeordnet ist. Ebenso ist jeder dieser Gruppen 32 nur eine einzige Einleitstelle 23 zugeordnet. Zur Frischgasversorgung dieser separaten Gruppen 32 ist die Frischgasleitung 9 jeweils an einen separaten Frischgasverteiler 11 angeschlossen. Ebenso ist es möglich, die jeweilige Frischgasleitung 9 auf die dieser Gruppe 32 zugeordneten Brennräume 4 aufzuzweigen. Ebenso ist hier vorgesehen, die Frischgasleitung 9 an der Aufzweigstelle 10 für die beiden Gruppen 32 aufzuzweigen. Dementsprechend ist ein stromauf der Aufzweigstelle 10 liegender, die Ladeeinrichtung 12 enthaltender gemeinsamer Abschnitt der Frischgasleitung 9 vorgesehen, und sind zwei separate Abschnitte der Frischgasleitung 9 vorgesehen, die sich stromab der Aufzweigstelle 10 befinden und die jeweils ein Schaltventil 16 und stromab davon jeweils eine Einleitstelle 23 enthalten und die zu den Brennräumen 4 der jeweiligen Gruppe 32 führen.

Alternativ ist es bei anderen Ausführungsformen ebenso möglich, jedem Brennraum 4 jeweils ein eigenes Schaltventil 16 in einem separaten Abschnitt der Frischgasleitung 9 oder - bei entsprechend großvolumigen Brennräumen 4 - jeweils mehrere Schaltventile 16 in entsprechend mehreren, dem jeweiligen Brennraum 4 zugeordneten parallelen separaten Abschnitten der Frischgasleitung 9 anzuordnen.

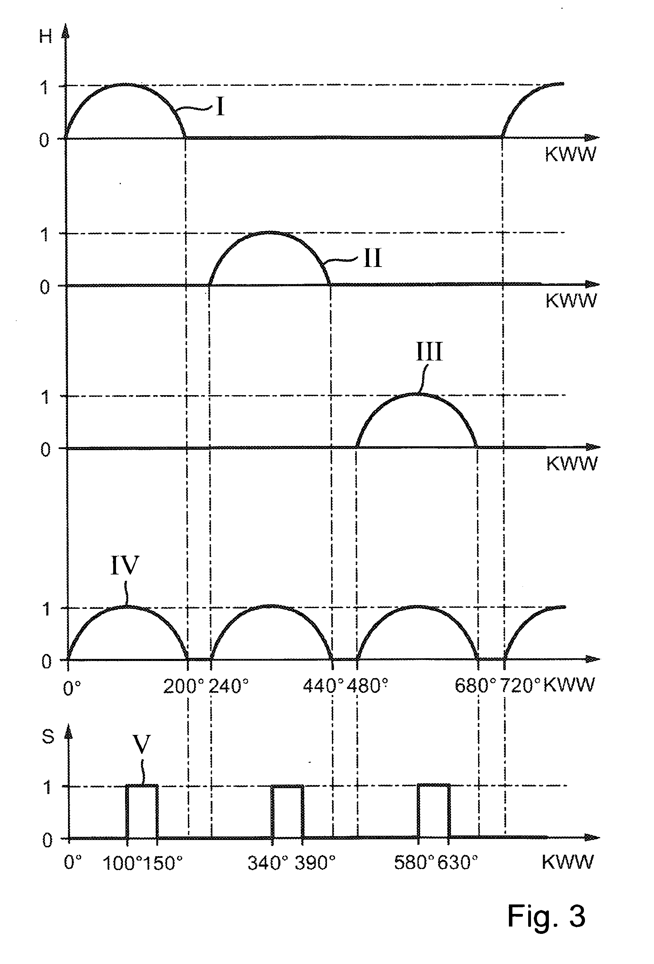

Mit Bezug auf Fig. 3 wird im folgenden die mit Hilfe des wenigstens einen Schaltventils 16 realisierbare Abgasrückführung für die Brennräume 4 der zugehörigen Gruppe 32 näher erläutert. Fig. 3 zeigt in einem oberen Abschnitt Zusammenhänge bzw. Verläufe I bis IV zwischen dem Hub H eines Einlassventils 25 in Abhängigkeit eines Kurbelwellenwinkels KWW bei den Brennräumen 4 der gleichen Gruppe 32. Dabei ist der ganz oben dargestellte Verlauf I einem ersten Brennraum 4, der darunter gezeigte Verlauf II einem zweiten Brennraum 4 und der darunter angeordnete Verlauf III einem dritten Brennraum 4 zugeordnet. Der darunter angeordnete Verlauf IV stellt die darüber angeordneten drei Verläufe I bis III kumuliert dar und repräsentiert somit den Hubverlauf aller Einlassventile 25 innerhalb der Gruppe 32 der zusammengehörigen Brennräume 4. In einem unteren Abschnitt der Fig. 3 ist ein Verlauf bzw. Zusammenhang V eines Schaltzustands S in Abhängigkeit des Kurbelwellenwinkels KWW für das diesen Brennräumen 4 bzw. dieser Gruppe 32 zugeordnete Schaltventil 16 wiedergegeben.

Der Schließzustand des jeweiligen Einlassventils 25 ist dabei auf der Ordinate mit "0" symbolisiert, während der maximal erzielbare Öffnungshub auf der Ordinate mit "1" symbolisiert ist. Dementsprechend ist auch für das Schaltventil 16 die Schließstellung auf der Ordinate mit "0" und die Offenstellung mit "1" symbolisiert.

Der Einlassvorgang des ersten Brennraums 4 weist gemäß dem Verlauf I seinen Einlassbeginn exemplarisch bei einem Kurbelwellenwinkel von 0° auf, also bei 0° KWW. Dieser Einlassvorgang weist sein Einlassende beispielsweise bei einem Kurbelwellenwinkel von 200° auf, also bei 200° KWW. Erkennbar weichen Einlassbeginn und Einlassende im gezeigten Beispiel vom tatsächlichen Einlasshub oder Saughub des zugehörigen Kolbens ab, der nur 180° KWW umfasst. Entsprechend dem Verlauf II beginnt der Einlassvorgang des zweiten Brennraums 4 bei einem Einlassbeginn mit 240° KWW und endet bei einem Einlassende mit 440° KKW. Dementsprechend beginnt gemäß dem Verlauf III beim dritten Brennraum 4 der Einlassvorgang bei einem Einlassbeginn mit 480° KWW und endet bei einem Einlassende mit 680° KWW. Bei 720° KWW wiederholt sich der gesamte Zyklus in dieser Gruppe 32.

Erkennbar ist das Schaltventil 16 am Anfang jedes Einlassvorgangs geschlossen und öffnet erst während des jeweiligen Einlassvorgangs, also zeitlich nach dem jeweiligen Einlassbeginn. Beispielsweise öffnet das Schaltventil 16 den Strömungsquerschnitt 17 etwa in der Mitte des jeweiligen Einlassvorgangs, also wenn das zugehörige Einlassventil 25 seinen maximalen Öffnungshub erreicht. Das bedeutet hier, dass das Schaltventil 16 exemplarisch bei 100° KWW, dann wieder bei 340° KWW und nochmals bei 580° KWW öffnet. Bis zum Öffnen des Schaltventils 16 kann sich im jeweiligen Brennraum 4 durch den Saughub des zugehörigen Kolbens ein Unterdruck ausbilden, der die Ansaugung von über die AGR-Leitung 21 rückgeführtem Abgas ermöglicht.

Bei dem hier gezeigten Ausführungsbeispiel wird das jeweilige Schaltventil 16, nach dem es zur Beladung des jeweiligen Brennraums 4 mit Frischgas in seine Offenstellung überführt worden ist, noch innerhalb des Einlassvorgangs, also zeitlich vor dem Einlassende wieder zum Schließen angesteuert, also in seine Schließstellung überführt. Beispielsweise schließt das Schaltventil 16 für den ersten Brennraum bereits bei 150° KWW, für den zweiten Brennraum 4 bei 390° KWW und für den dritten Brennraum 4 bei 630° KWW. Durch diese Betätigungsstrategie des Schaltventils 16 wird die Frischgasbeladung der Brennraum 4 bereits vor dem Schließen des jeweiligen Einlassventils 25 beendet. Die Ansteuerung des Schaltventils 16 erfolgt insbesondere gezielt so, dass damit ein Miller-Zyklus realisierbar ist. Durch diese Vorgehensweise kann die Temperatur in den Brennräumen 4 während des Verbrennungsprozesses abgesenkt werden. Da zwischen der Verbrennungstemperatur und der Bildung von NOₓ ein exponentieller Zusammenhang besteht, kann bereits eine geringfügige Temperaturabsenkung im Verbrennungsprozess eine signifikante Reduzierung der NOₓ-Emissionen bewirken.

Besonders vorteilhaft ist eine Ausgestaltung des Betriebsverfahren bzw. der Brennkraftmaschine 1, bei welcher das jeweilige Schaltventil 16 so betätigt wird, dass damit im jeweiligen Brennraum 4 eine Impulsaufladung mit Frischgas realisiert werden kann. Unter einer "Impulsaufladung" wird im vorliegenden Zusammenhang ein Beladungsvorgang verstanden, der dynamische Strömungsvorgänge zur Erhöhung der Frischgasbeladung ausnutzt. Durch gezielte Ansteuerung des jeweiligen Schaltventils 16 lassen sich in der Frischgasanlage 6 Druckwellen mit Überdruck bzw. mit Unterdruck erzeugen, die eine impulsartige Frischgasströmung in den jeweiligen Brennraum 4 bewirken. Beispielsweise kann die Rückführung des Abgases über die AGR-Anlage 8 gedrosselt erfolgen, derart, dass sich im jeweiligen Brennraum 4 bei geschlossenem Schaltventil 16 ein Unterdruck ausbildet, der ausreicht, durch das Öffnen des jeweiligen Schaltventils 16 eine Frischgasdruckwelle auszulösen, die in den jeweiligen Brennraum 4 eindringt. Auch kann durch rechtzeitiges Schließen des Schaltventils 16 der durch die Druckwelle erzeugte erhöhte Druck im Brennraum 4 aufrecht erhalten bleiben. Je nach Druckniveau sperrt dann das Rückschlagsperrventil 24 die weitere Rückführung von Abgas. Durch die gezielte Ausnutzung der Impulsaufladung lässt sich auch bei einer durch das Schaltventil 16 gesteuerten Frischgasbeladungszeit, die deutlich kürzer sein kann als der durch das jeweilige Einlassventil 25 gesteuerte Einlassvorgang, eine ausreichende Befüllung des Brennraums 4 mit Frischgas erreichen.

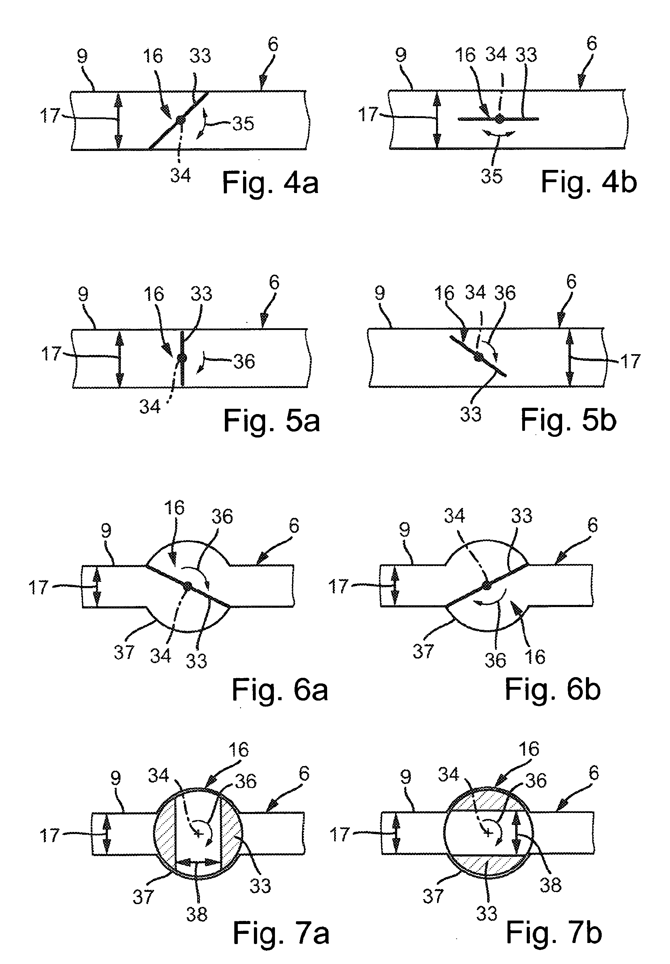

In Fig. 3 ist im unteren Abschnitt des Diagramms der zeitliche Verlauf V eines diskontinuierlich arbeitenden Schaltventils 16 wiedergegeben, das vergleichsweise schnell, also mit kurzen Schaltzeiten, zwischen seiner Schließstellung und seiner Offenstellung umschaltbar ist. Ein derartiges Schaltventil 16 ist exemplarisch in Fig. 4 wiedergegeben, und zwar in Fig. 4a in seiner Schließstellung und in Fig. 4b in seiner Offenstellung. Bei anderen Ausführungsformen kann das jeweilige Schaltventil 16 auch kontinuierlich arbeiten und dementsprechend den jeweiligen Strömungsquerschnitt 17 nicht schlagartig, sondern allmählich, also quasi kontinuierlich vom Schließzustand bis zum Offenzustand vergrößern und ausgehend vom Offenzustand zum Schließzustand wieder verkleinern. Typischerweise arbeiten Ladungswechselventile 25, 26, sofern sie mit einer Nockenwelle gesteuert sind, kontinuierlich. Beispiele für kontinuierlich arbeitende Schaltventile 16 sind in den Fig. 5 bis 7 wiedergegeben, wobei die Fig. 5a, 6a, 7a jeweils eine Schließstellung zeigen, während die Fig. 5b, 6b und 7b jeweils eine Offenstellung zeigen.

Entsprechend den Fig. 4 bis 7 weist das jeweilige Schaltventil 16 ein Ventilglied 33 auf, das vorzugsweise um eine sich quer zur Hauptströmungsrichtung des Frischgases erstreckende Drehachse 34 drehend verstellbar gelagert ist. Bei den Ausführungsformen der Fig. 4 bis 6 handelt es sich beim Ventilglied 33 exemplarisch um eine Klappe, insbesondere eine Schmetterlingsklappe. Bei der Ausführungsform gemäß Fig. 7 handelt es sich beim Ventilglied 33 um einen Drehschieber.

Das in Fig. 4 gezeigte Schaltventil 16 arbeitet mit einer diskontinuierlichen bzw. oszillierenden Betätigung des Ventilsglieds 33. Hierzu ist das Ventilglied 33 zwischen der in Fig. 4a gezeigten Schließstellung und der in Fig. 4b gezeigten Offenstellung hin und her umschaltbar. Diese Umschaltbarkeit ist in Fig. 4 durch einen Doppelpfeil 35 angedeutet. Das Schaltglied 33 ist hier so ausgestaltet, dass es zwischen seinen Endpositionen nur um etwa 45° verschwenkt werden muss. Hierdurch lassen sich extrem kurze Schaltzeiten realisieren. Beispielsweise ist das Schaltventil 16 nach Art eines Feder-Masse-Schwingungssystems aufgebaut, das einen Neutralzustand aufweist, bei dem sich das Stellglied 33 etwa mittig zwischen den beiden Endstellungen befindet. In diese Neutralstellung ist das Ventilglied 33 mit einer entsprechenden Federeinrichtung vorgespannt. In den Endstellungen ist das Ventilglied 33 bzw. ein damit antriebsverbundenes Antriebselement, vorzugsweise ein Anker einer elektromagnetischen Stelleinrichtung, mittels elektromagnetischer Kräfte festgehalten. Hierdurch kann die Rückstellkraft der Federeinrichtung beim Umschalten des Ventilglieds 33 zu dessen Beschleunigung verwendet werden. Mit Hilfe einer derartigen Stelleinrichtung lassen sich für das Schaltventil 16 z.B. Schaltzeiten von weniger als 5 ms erzielen.

Bei den Fig. 5 bis 7 arbeitet das Schaltventil 16 mit einer kontinuierlichen Verstellung des Ventilglieds 33. Diese kontinuierliche Verstellung ist durch einen Drehrichtungspfeil 36 symbolisiert; in dieser Drehrichtung rotiert das Ventilglied 33 um die Drehachse 34. Dabei ist die Rotationsgeschwindigkeit in Abhängigkeit der Drehzahl der Brennkraftmaschine 1, also in Abhängigkeit der Drehzahl der Kurbelwelle variierbar. Ebenso ist es grundsätzlich möglich, die Rotationsgeschwindigkeit für das Ventilglied 33 unabhängig von der Drehzahl der Kurbelwelle zu variieren, um dadurch die Schaltzeiten für das Schaltventil 16 innerhalb der Einlassvorgänge zu verändern. Insbesondere lassen sich die Schaltzeitpunkte des Schaltventils 16 relativ zur Phasenlage der Einlassventile 25 justieren, wenn mittels eines geeigneten, dynamischen Stellantriebs die kontinuierliche Rotation des Ventilglieds 33 mit Beschleunigungen und/oder Verzögerungen überlagert werden kann.

Bei der in Fig. 5 gezeigten Ausführungsform besitzt das Schaltglied 33 seine Schließstellung nur in dem in Fig. 5a gezeigten engen Winkelbereich, in dem das Ventilglied 33 quasi senkrecht zur Hauptströmungsrichtung steht. Sobald das Ventilglied 33 diese Schließstellung verlässt wird der Strömungsquerschnitt 17 zunehmend geöffnet. Fig. 5b zeigt eine von quasi unendlich vielen Offenstellungen des Ventilsglieds 33.

Bei der in Fig. 6 gezeigten Ausführungsform weist das Ventilglied 33 einen größeren Querschnitt auf als die zu steuernde Frischgasleitung 9. Dabei taucht das Ventilglied 33 in eine Ausbuchtung 37 ein, sobald es einen dem Schließzustand des Schaltventils 16 zugeordneten Winkelbereich erreicht. Fig. 6a zeigt somit eine von vielen Schließstellungen. Sobald das Ventilglied 33 aus der Ausbuchtung 37 herausdreht, wird der Strömungsquerschnitt 17 geöffnet. Dementsprechend zeigt Fig. 6b eine von vielen Offenstellungen. Um bei derartigen Ausführungsformen die Phasenlage zwischen dem rotierenden Ventilglied 33 und den Einlassventilen 25 einstellen zu können, ist - unabhängig von den weiter oben beschriebenen Möglichkeiten - denkbar, die Bogenlänge der Ausbuchtung 37 verstellbar auszugestalten, z.B. mittels einer drehbar angeordneten Hülse. Durch "Ausfahren" der Hülse kann die Schließdauer des Schaltventils 16 verlängert werden, z.B. durch Verschiebung des Schließzeitpunkts nach vorn und/oder durch Verschiebung des Öffnungszeitpunktes nach hinten.

Auch der in Fig. 7 gezeigte Drehschieber dreht in einer Ausbuchtung 37. Dabei sind die Ausbuchtung 37, der steuerbare Strömungsquerschnitt 17 und ein Strömungsquerschnitt 38 des Schaltglieds 33 hier so aufeinander abgestimmt, dass sich für den in Fig. 7a gezeigten Schließzustand ein bestimmter Winkelbereich ergibt, in dem der Strömungsquerschnitt 17 gesperrt ist. Desweiteren erfolgt die Abstimmung beispielsweise so, dass die Strömungsquerschnitte 17, 38 gleich groß sind, so dass sich in der in Fig. 7b gezeigten Offenstellung kaum eine Drosselwirkung ergibt.

Bei einer speziellen Ausführungsform kann vorgesehen sein, dass das jeweilige Schaltventil 16 einen Stellantrieb aufweist, der mehrere Ventilglieder 33 gleichzeitig antreibt, die hierzu beispielsweise auf einer gemeinsamen Antriebswelle angeordnet sein können. Hierzu ist es grundsätzlich möglich, die einzelnen Ventilglieder 33 zueinander Phasenverschoben anzuordnen, und zwar analog zu einer Phasenverschiebung der Einlassvorgänge der diesen Ventilglieder 33 zugeordneten Brennräumen 4. Somit ist der Aufwand zur Realisierung der Brennkraftmaschine 1 auch bei anderen Taktfolgen und anderen Zylinderzahlen möglich.

## Patentansprüche

1. Brennkraftmaschine, insbesondere in einem Kraftfahrzeug,
- mit einer Frischgasanlage (6) zur Versorgung von Brennräumen (4) der Brennkraftmaschine (1) mit Frischgas,
- mit einer Abgasanlage (8) zum Abführen von Abgas aus den Brennräumen (4),
- mit einer Abgasrückführanlage (8) zum Rückführen von Abgas von der Abgasanlage (7) in die Frischgasanlage (6),
- wobei die Frischgasanlage (6) zum Einstellen einer Abgasrückführrate zumindest ein Schaltventil (16) zum Steuern eines Strömungsquerschnitts (17) in der Frischgasanlage (6) enthält, das stromauf einer Einleitstelle (23) angeordnet ist, über die das rückgeführte Abgas von der Abgasrückführanlage (8) in die Frischgasanlage (6) gelangt,
- wobei eine Steuereinrichtung (30) zum Betätigen des wenigstens einen Schaltventils (16) so ausgestaltet ist, dass sie während eines Einlassvorgangs eines jeweiligen stromab der Einleitstelle (23) angeordneten Brennraums (4) zeitlich nach einem Einlassbeginn das jeweilige Schaltventil (16) zum Öffnen des Strömungsquerschnitts (17) ansteuert, **dadurch gekennzeichnet, dass**
die Brennkraftmaschine (1) eine Ladeeinrichtung (12) zur Druckerhöhung im Frischgas aufweist, die in der Frischgasanlage (6) stromauf des wenigstens einen Schaltventils (16) angeordnet ist, und dass
das jeweilige Schaltventil (16) mehreren Brennräumen (4) zugeordnet ist, deren Einlassvorgänge zeitlich versetzt aufeinander folgen.

2. Brennkraftmaschine nach Anspruch 1,
**dadurch gekennzeichnet,**
**dass** die Abgasrückführanlage (8) stromauf der Einleitstelle (23) ein Rückschlagsperrventil (24) enthält, das ab einer vorbestimmten Druckdifferenz öffnet und eine Abgasströmung in die Frischgasanlage (6) ermöglicht.

3. Brennkraftmaschine nach Anspruch 1 oder 2,
**dadurch gekennzeichnet,**
**dass** die Steuereinrichtung (30) außerdem so ausgestaltet ist, dass sie während des Einlassvorgangs zeitlich vor einem Einlassende das jeweilige Schaltventil (16) zum Schließen des Strömungsquerschnitts (17) ansteuert.

4. Brennkraftmaschine nach einem der Ansprüche 1 bis 3,
**dadurch gekennzeichnet,**
**dass** die Ladeeinrichtung (12) durch einen Verdichter (13) eines Abgasturboladers (14) gebildet ist, dessen Turbine (15) in der Abgasanlage (7) stromauf einer Abzweigstelle (22) angeordnet ist, über die das rückzuführende Abgas von der Abgasanlage (7) in die Abgasrückführanlage (8) gelangt.

5. Brennkraftmaschine nach einem der Ansprüche 1 bis 4,
**dadurch gekennzeichnet,**
**dass** die Steuereinrichtung (30) außerdem so ausgestaltet ist, dass sie während des Einlassvorgangs das jeweilige Schaltventil (16) zur Realisierung einer Impulsaufladung des jeweiligen Brennraums (4) mit Frischgas ansteuert.

6. Brennkraftmaschine nach einem der Ansprüche 1 bis 5,
**dadurch gekennzeichnet,**
**dass** eine das Schaltventil (16) enthaltende und die Einleitstelle (23) aufweisende Frischgasleitung (9) der Frischgasanlage (6) stromab der Einleitstelle (23) zu den diesem Schaltventil (16) zugeordneten Brennräumen (4) aufgezweigt ist oder in einen Frischgasverteiler (11) führt, der den diesem Schaltventil (16) zugeordneten Brennräumen (4) zugeordnet ist.

7. Brennkraftmaschine nach einem Ansprüche 1 bis 6,
**dadurch gekennzeichnet,**
- **dass** die Brennräume (4) in wenigstens zwei Gruppen (32) unterteilt sind,
- **dass** jeder Gruppe (32) ein solches Schaltventil (16) und eine solche Einleitstelle (23) zugeordnet ist,
- **dass** ein gemeinsamer Abschnitt einer Frischgasleitung (9) der Frischgasanlage (6) in zumindest zwei separate Abschnitte aufgezweigt ist, von denen jeder einer der Gruppen (32) zugeordnet ist und das dieser Gruppe (32) zugeordnete Schaltventil (16) und die dieser Gruppe (32) zugeordnete Einleitstelle (23) enthält.

8. Brennkraftmaschine nach einem der Ansprüche 1 bis 7, **dadurch gekennzeichnet,**
- **dass** das jeweilige Schaltventil (16) mit wenigstens einem oszillierend oder diskontinuierlich verstellbaren Ventilglied (33) arbeitet, das mit vorbestimmten oder vorgebbaren Schaltzeitpunkten zwischen einer Offenstellung und einer Schließstellung umschaltbar ist, oder
- **dass** das jeweilige Schaltventil (16) mit wenigstens einem kontinuierlich verstellbaren Ventilglied (33) arbeitet, das mit einer vorbestimmten oder vorgebbaren Stellgeschwindigkeit abwechselnd eine Schließstellung und eine Offenstellung durchfährt.

9. Brennkraftmaschine nach Anspruch 8,
**dadurch gekennzeichnet,**
- **dass** das jeweilige Schaltventil (16) einen Stellantrieb aufweist, der mehrere Ventilglieder (33) gleichzeitig antreibt,
- **dass** die einzelnen Ventilglieder (33) zueinander phasenverschoben angeordnet sind analog zu einer Phasenverschiebung der Einlassvorgänge der den Ventilgliedern (33) zugeordneten Brennräume (4).

## Claims

1. An internal combustion engine, in particular in a motor vehicle,
- having a fresh-gas arrangement (6) for supplying fresh gas to combustion chambers (4) of the internal combustion engine (1),
- having an exhaust-gas recirculation arrangement (8) for conducting exhaust gas out of the combustion chambers (4),
- having an exhaust-gas recirculation arrangement (8) for recirculating exhaust gas from the exhaust gas arrangement (7) into the fresh-gas arrangement (6),
- wherein to adjust an exhaust gas recirculation rate, the fresh-gas arrangement (6) contains at least one control valve (16) for controlling a cross section of flow (17) in the fresh-gas arrangement (6), said control valve being arranged upstream from an introduction point (23) by means of which the recirculated exhaust gas arrives from the exhaust-gas recirculation arrangement (8) into the fresh-gas arrangement (6),
- wherein a control device (30) for actuating the at least one control valve (16) is configured in such a manner that it actuates the respective control valve (16) to open the cross section of flow (17) during an intake process of a combustion chamber (4) respectively arranged downstream from the introduction point (23) temporally after the start of the intake, **characterised in that**
the internal combustion engine (1) has a charging device (12) that increases pressure in the fresh gas and is arranged upstream from the at least one control valve (16) in the fresh-gas arrangement (6), and **in that**
the respective control valve (16) is associated with a plurality of combustion chambers (4) the inlet procedures of which occurring in temporal succession.

2. The internal combustion engine as specified in claim 1,
**characterised in that**
the exhaust gas recirculation arrangement (8) upstream from the introduction point (23) contains a non-return blocking valve (24) that opens after a pre-determined pressure differential, thereby making it possible for exhaust gas to flow into the fresh gas arrangement (6).

3. The internal combustion engine as specified in claim 1 or claim 2,
**characterised in that**
the control device (30) is furthermore configured in such a manner that during the intake process, it actuates prior to an intake close the respective control valve (16) to close the cross section of flow (17).

4. The internal combustion engine as specified in any one of the claims 1 to 3,
**characterised in that**
the charging device (12) is formed by a compressor (13) of an exhaust-gas turbocharger (14) the turbine (15) of which is arranged in the exhaust gas arrangement (7) upstream from a branching point (22) and by means of which the exhaust gas to be recirculated from the exhaust gas arrangement (7) arrives in the exhaust-gas recirculation arrangement (8).

5. The internal combustion engine as specified in any one of the claims 1 to 4,
**characterised in that**
the control device (30) is moreover configured in such a manner that during the intake process, it actuates the respective control valve (16) to realise an impulse charging of the respective combustion chamber (4).

6. The internal combustion engine as specified in any one of the claims 1 to 5,
**characterised in that**
a fresh-gas line (9), which contains the control valve (16) and has the introduction point (23), of the fresh-gas arrangement (6) is, downstream from the introduction point (23), branched to the combustion chambers (4) associated with this control valve (16) or leads into a fresh-gas distributor (11) that is associated with the combustion chambers (4) associated with this control valve (16).

7. The internal combustion engine as specified in any one of the claims 1 to 6,
**characterised in that**
- the combustion chambers (4) are sectioned into at least two groups (32),
- each group (32) is associated with such a control valve (16) as well as with such an introduction point (23),
- a common section of a fresh-gas line (9) of the fresh-gas arrangement (6) is branched into at least two separate sections of which each is associated with one of the groups (32) and contains the control valve (16) associated with this group (32) as well as the introduction point (23) associated with this group (32).

8. The internal combustion engine as specified in any one of the claims 1 to 7,
**characterised in that**
- the respective control valve (16) works with at least one oscillating or discontinuously adjustable valve member (33) that can be switched between an open position and a closed position at pre-determined or pre-determinable switching times, or
- the respective control valve (16) works with at least one continuously adjustable valve member (33) that alternatingly passes through a closed position and an open position at a pre-determined or pre-determinable switching rate.

9. The internal combustion engine as specified in claim 8,
**characterised in that**
- the respective control valve (16) has an actuator that simultaneously actuates a plurality of valve members (33),
- the individual valve members (33) are arranged in a phase-delayed manner with respect to one another analogous to a phase displacement of the intake processes of the combustion chambers (4) associated with the valve members (33).

## Revendications

1. Moteur à combustion interne, notamment dans un véhicule automobile,
- comportant une installation de gaz frais (6) pour alimenter des chambres de combustion (4) du moteur à combustion interne (1) en gaz frais,
- comportant une installation de gaz d'échappement (8) pour évacuer les gaz d'échappement hors des chambres de combustion (4),
- comportant une installation de réintroduction de gaz d'échappement (8) pour réintroduire des gaz d'échappement provenant de l'installation de gaz d'échappement (7) dans l'installation de gaz frais (6),
- dans lequel l'installation de gaz frais (6) contient afin de régler un taux de réintroduction de gaz d'échappement au moins une valve de commande (16) pour commander une section transversale d'écoulement (17) dans l'installation de gaz frais (6), qui est disposée en amont d'un port d'entrée (23), par l'intermédiaire de laquelle le gaz d'échappement réintroduit parvient de l'installation de réintroduction de gaz d'échappement (8) dans l'installation de gaz frais (6),
- dans lequel un dispositif de commande (30) pour actionner au moins une valve de commande (16) est réalisé de telle sorte que pendant un processus d'admission d'une chambre de combustion (4) respectivement disposée an aval du port d'entrée (23), il pilote temporellement après un début d'admission la valve de commande respective (16) afin d'ouvrir la section transversale d'écoulement (17), **caractérisé en ce que**
le moteur à combustion interne (1) présente un dispositif de charge (12) pour augmenter la pression des gaz frais, lequel est disposé dans l'installation de gaz frais (6) en amont d'au moins une valve de commande, et **en ce que**
la valve de commande respective (16) est coordonnée à plusieurs chambres de combustion (4), dont les processus d'admission se succèdent avec un décalage temporel.

2. Moteur à combustion interne selon la revendication 1,
**caractérisé en ce que**
l'installation de réintroduction de gaz d'échappement (8) contient en amont du port d'entrée (23) une valve de retenue (24), qui s'ouvre à partir d'une différence de pression prescrite et permet un écoulement de gaz d'échappement dans l'installation de gaz frais (6).

3. Moteur à combustion interne selon la revendication 1 ou 2,
**caractérisé en ce que**
le dispositif de commande (30) est en outre réalisé de telle sorte qu'il pilote temporellement pendant le processus d'admission avant une fin d'admission la valve de commande respective (16) afin de fermer la section transversale d'écoulement (17).

4. Moteur à combustion interne selon une des revendications 1 à 3,
**caractérisé en ce que**
le dispositif de charge (12) est formé par un compresseur (13) d'un turbocompresseur de gaz d'échappement (14), dont la turbine (15) est disposée dans l'installation de gaz d'échappement (7) en amont d'un embranchement (22), par l'intermédiaire duquel le gaz d'échappement à réintroduire parvient depuis l'installation de gaz d'échappement (7) dans l'installation de réintroduction de gaz d'échappement (8).

5. Moteur à combustion interne selon une des revendications 1 à 4,
**caractérisé en ce que**
le dispositif de commande (30) est en outre réalisé de telle sorte qu'il pilote pendant le processus d'admission la valve de commande respective (16) afin de réaliser une accumulation de charge par impulsions de la chambre de combustion respective (4) avec des gaz frais.

6. Moteur à combustion interne selon une des revendications 1 à 5,
**caractérisé en ce que**
une conduite de gaz frais (9) de l'installation de gaz frais (6) contenant la valve de commande (16) et présentant le port d'entrée (23) est ramifiée en aval du port d'entrée (23) dans la direction des chambres de combustion (4) coordonnée à cette valve de commande (16) ou mène à un distributeur de gaz frais (11), qui est affecté aux chambres de combustion (4) coordonnées à cette valve de commande (16).

7. Moteur à combustion interne selon une des revendications 1 à 6,
**caractérisé en ce que**
- les chambres de combustion (4) sont divisées en au moins deux groupes (32),
- une telle valve de commande (16) et un tel port d'entrée (23) est coordonné à chaque groupe (32),
- une portion commune d'une conduite de gaz frais (9) de l'installation de gaz frais (6) est ramifiée en au moins deux portions séparées, desquelles chacune est affectée à un des groupes (32) et qui contient la valve de commande (16) coordonnée à ce groupe (32) et le port d'entrée (23) coordonné à ce groupe (32).

8. Moteur à combustion interne selon une des revendications 1 à 7,
**caractérisé en ce que**
- la valve de commande respective (16) fonctionne avec au moins un organe de valve (33) réglable de manière oscillante ou discontinue, qui peut être commuté à des moments de commutation prédéterminés ou prescrits entre une position d'ouverture et une position de fermeture, ou
- la valve de commande respective (16) fonctionne avec au moins un organe de soupape (33) réglable en continu, qui passe en alternance avec une vitesse de réglage prédéterminée ou prescrite d'une position de fermeture à une position d'ouverture et inversement.

9. Moteur à combustion interne selon la revendication 8,
**caractérisé en ce que**
- la valve de commande respective (16) présente un actionneur, qui entraîne simultanément plusieurs organes de valve (33),
- les organes de valve individuels (33) sont disposés en déphasage les uns par rapport aux autres, de manière analogue à un déphasage des processus d'admission des chambres de combustion (4) coordonnées aux organes de valve (33).
